# EUROPÄISCHE PATENTSCHRIFT

(11) **EP 0 764 086 B1**
(45) Veröffentlichungstag und Bekanntmachung des Hinweises auf die Patenterteilung: **28.07.1999**
(21) Anmeldenummer: 95915793.4
(22) Anmeldetag: 15.04.1995
(51) Int. Cl.: B41M 3/00, B41M 1/34

(54) **VERFAHREN ZUR HERSTELLUNG VON TRANSFERDRUCKPAPIEREN**
PROCESS FOR PRODUCING TRANSFER PRINTING PAPER
PROCEDE DE FABRICATION DE PAPIER D'IMPRESSION PAR TRANSFERT

(30) Priorität: 23.04.1994 DE 4414270
(43) Veröffentlichungstag der Anmeldung: 26.03.1997
(73) Patentinhaber: Neuberger, Manfred, D-63543 Neuberg (DE)
(72) Erfinder: Neuberger, Manfred, D-63543 Neuberg (DE)
(74) Vertreter: Wolf, Günter, Dipl.-Ing.
(86) Internationale Anmeldenummer: DE9500529
(87) Internationale Veröffentlichungsnummer: WO9529065

(56) Entgegenhaltungen:
- EP-A- 0 034 817
- DE-A- 4 138 417
- DE-A- 4 203 162
- US-A- 4 636 332
- PATENT ABSTRACTS OF JAPAN, unexamined applications, C Sektion, Band 17, Nr. 489, ver!ffentlicht 06 September 1993 THE PATENT OFFICE JAPANESE GOVERNMENT Seite 75 C 1106; & JP,A,05 123 635 (NIPPON OIL & FATS),

## Beschreibung

Die Erfindung betrifft ein verfahren zur Herstellung von Transferdruckpapieren.

Derartige Transferdruckpapiere werden für das Aufbrennen von farbigen, insbesondere bunten Bild-, Schrift- und/oder Dekordarstellungen auf bei hohen Erhitzungstemperaturen formbeständig bleibende Gegenstände, insbesondere Gegenstände aus Keramik oder Glas verwendet. Die in einer organischen Lösung angesetzten Keramikfarbpigmente werden dabei im Tiefdruckverfahren auf das Transferdruckpapier übertragen vor ihrer Übernahme auf den Tiefdruckzylinder in homogener Verteilung im Lösungsansatz gehalten. Ein derartiges Verfahren ist nach der DE-A-42 03 162 bekannt. Dieses Verfahren wurde entwickelt, nachdem sich herausgestellt hatte, daß die Herstellung von Transferdruckpapieren unter Anwendung normaler Tiefdruckpraktiken zu nicht befriedigenden Ergebnissen führte. Das Verfahren nach der DE-A-42 03 162, bei dem handelsübliche Keramikfarbpigmente verwendet werden, führte demgegenüber zu schon wesentlich besseren Druckwiedergaben der jeweiligen Vorlage. Inzwischen mußte allerdings festgestellt werden, daß keine durchgehend gleichbleibende, d.h. reproduzierbare Wiedergabe-Brillanz für alle in einer Charge gedruckten Transferpapiere erreichbar ist, abgesehen davon, daß die übernormal große Näpfchentiefe, die beim Verfahren nach der DE-A-42 03 162 noch als notwendig angesehen wurde, um durch große Näpfchentiefe viel Farbe einbringen zu können, mit einem unbefriedigenden Ergebnis insofern verbunden ist, als nicht durchgehend gleichmäßig gute Druckergebnisse und in Folge gleichmäßig gute Brennergebnisse erreichbar sind.

Die Näpfchentiefe beim normalen Tiefdruck beträgt je nach Art der Herstellung der Näpfchen (Ätzung oder Gravur) von 2 µm bzw. 7 µm bis ca. 60 µm, wobei hellen Bildbereichen der Vorlage durch weniger tiefe Näpfchen und dunklen durch entsprechend tiefere Näpfchen Rechnung getragen wird.

Nachfolgend werden folgende Begriffe benutzt, unter denen zu verstehen ist:
- Farbpigmente:: Farbpartikel ohne Glaszusatz;
- Keramikfarbpigmente:: Farbpartikel mit Glas;
- Bindemittel:: der die Farb- und Keramikfarbpigmente bindende Anteil im druckbaren Farbansatz, der durch organische Lösungsmittel für das Tiefdrucken auf die geeignete Viskosität eingestellt ist;
- Farbmenge:: Menge des druckbaren Farbansatzes, der in die Näpfchen einbringbar ist.

Ausgehend vom Herstellungsverfahren für Transferdruckpapiere nach der DE-A-42 03 162, liegt der Erfindung die Aufgabe zugrunde, dieses Verfahren dahingehend zu verbessern, daß die Reproduzierbarkeit der Darstellungswiedergabe beim Brennen bzw. Erhitzen der Gegenstände gewährleistet und die Qualität der Darstellungsvorlage mit optimaler Brillanz erreichbar ist.

Diese Aufgabe ist mit dem Verfahren nach der Erfindung dadurch gelöst, daß für den Druck des Transferpapieres Näpfchentiefen im Bereich von 20 µm bis 60 µm in Abhängigkeit von der Tönung der Vorlage und Keramikfarbpigmente verwendet werden, deren Glaspartikelanteil, und zwar mindestens der nicht roten Farbpigmente in bezug auf den bisher üblichen Glaspartikelanteil von 70-80% um mindestens 10% im Farbansatz reduziert ist und dabei durch ein entsprechend prozentuales Mehr an reinen Farbpigmenten der Glaspartikelanteil an der Gesamtmenge der im Farbansatz enthaltenen Farbpigmente und Glaspartikel kleiner gehalten wird als der Farbpigmentanteil.

Nach der vorliegenden Erfindung werden also gezielt Näpfchentiefen verwendet, die im wesentlichen im Bereich von 20 bis 60 µ m liegen, also bspw. 30 bis 60 µm betragen, was im Vergleich zur diesbezüglichen Maßgabe der DE-A-42 03 162 auch zu einer entsprechend reduzierten, in die Näpfchen einbringbaren Farbmenge führt, da dort Näpfchentiefen bis 100 µm als notwendig angesehen worden sind.

Mit dieser Maßgabe gezielt ausgewählter Näpfchentiefe ist es aber allein noch nicht getan. Keramikfarbpigmente haben je nach Hersteller der Pigmente einen relativ hohen Glaspartikelanteil, der in der Größenordnung von ca. 70 bis 80% liegt, wobei nicht genau zu definieren ist, welche Zuordnung die Glaspartikel zu den Farbpigmenten haben, d.h., ob diese zum Teil agglomeriert sind, zum Teil die Pigmente ganz umhüllen oder zum Teil die Farbpigmente nur teilweise einschließen. Es kann nur vermutet werden, daß insbesondere der hohe Glasanteil und ggf. auch dessen Zuordnung bzw. Verbindung zu den Farbpigmenten mit dafür verantwortlich ist, daß keine sichere Reproduzierbarkeit der Darstellungswiedergabe auf den gebrannten bzw. erhitzten Gegenständen gegeben ist, zumal beim Verfahren nach der DE-A-42 03 162 davon ausgegangen wurde, daß via großer Näpfchentiefe viel an Keramik-Farbpigmenten auf das Transferpapier übertragen werden müsse, mit denen aber auch ein entsprechend hoher Anteil an Glaspartikeln und insbesondere inzwischen ebenfalls als kritisch erkanntes Bindemittel mit in den Druck eingebracht wurde. Nur der Vollständigkeit halber sei darauf hingewiesen, daß auch im vorliegenden Fall auf ein Transferpapier mit einer Gelatine-, Wachs- oder Gummi-Arabikum-Schicht gedruckt und der fertige Druck mit einem sogenannten Übertragungslack überzogen wird.

Entscheidend für eine reproduzierbare Wiedergabebrillanz der Vorlage auf dem Endprodukt ist also einerseits und ausgehend vom Verfahren nach der DE-A-42 03 162 der Rückgriff auf beim Tiefdruck übliche Näpfchentiefen, dies aber gezielt auf einen bestimmten Näpfchentiefenbereich und andererseits die Reduzierung des Glasanteiles, d.h., die Keramikfarbpigmente müssen im Gegensatz zu handelsüblichen Keramik-Farbpigmenten einen entsprechend reduzierten Glaspartikelanteil haben.

Die Reduzierung des Glaspartikelanteiles wird bspw. einfach dadurch erreicht, sofern vom Pigmenthersteller nach Vorgabe gemäß der Erfindung nicht direkt Keramik-Farbpigmente mit entsprechend reduziertem Glaspartikelanteil geliefert werden können, daß man den handelsüblich gelieferten Keramik-Farbpigmenten mit ihrem hohen Glasanteil reine Farbpigmente, d.h., Farbpigmente ohne Glas entsprechend dosiert zugibt, so daß ein Farbansatz insgesamt einen entsprechend reduzierten Glasanteil enthält. Abgesehen davon, ist im nach dem erfindungsgemäßen Verfahren hergestellten Transferdruckpapier nicht nur ein entsprechend geringerer Glasanteil, sondern auch weniger Bindemittel in jedem Näpfchen vorhanden, dafür aber ein Mehr an Farbpigmenten, weil im Vergleich zum Verfahren nach der DE-A-42 03 162 durch die geringere Näpfchentiefe ein entsprechend geringerer Farbmengeneintrag erfolgt. Da einerseits Näpfchentiefen im wesentlichen im erwähnten Bereich liegen, andererseits aber auch Farbtonunterschieden Rechnung getragen werden muß, wird dies vorzugsweise durch entsprechende Querschnittsbemessungen (in Draufsicht) der Näpfchen und deren Dichteanordnung erreicht, und zwar im Gegensatz zum normalen Tiefdruck, bei dem dies in der Regel nur durch für die jeweilige Farbe unterschiedliche Näpfchentiefen bei durchgehend gleichgroßen Näpfchenöffnungen im Gesamtbereich von ca. 2 µm bis ca. 60 µm praktiziert wird. Die angeführte Einschränkung "mindestens der nicht roten Farbpigmente" hat ihren Grund darin, daß beim Brennen der hohe Glasanteil bei roten Keramik-Farbpigmenten, wie sich gezeigt hat, vorhanden sein muß, um die Farbwirkung von Rot beim Brennen überhaupt erhalten zu können. Für Rot können also ohne weiteres handelsübliche rote Keramik-Farbpigmente mit relativ hohem Glasanteil verwendet werden, was aber nicht ausschließt, auch bei Rot den Glasanteil zu reduzieren, falls dieser je nach Hersteller besonders hoch sein sollte.

Beim erfindungsgemäßen Verfahren wird also im Vergleich zum Verfahren nach der DE-A-42 03 162 bei Verwendung von Näpfchentiefen im angegebenen Bereich dafür gesorgt, daß bei entsprechend reduziertem Glasanteil im Farbansatz ein Mehr an Farbpigmenten in jedes Näpfchen eingebracht werden kann, und zwar nicht via großer Näpfchentiefe, sondern durch die Erhöhung des Farbpigmentanteiles im jeweiligen Farbansatz. Da ferner im Vergleich zum Verfahren nach der DE-A-42 03 162 geringere Näpfchentiefen verwendet werden, ist auch in jedem Näpfchen eine geringere Menge an Bindemittel vorhanden.

Für Hartporzellan hat es sich dabei als vorteilhaft erwiesen, daß mindestens eine gedruckte Farbschicht oder mindestens die oberste von mehreren gedruckten Farbschichten mit einer Abschlußschicht aus Glaspartikeln zu überdrucken, d.h., der reduzierte Glasanteil wird durch eine solche Abschlußschicht gewissermaßen wieder aufgefüttert und sorgt beim Brennen dafür, daß jedes Farbpigmentteilchen sicher im Glas eingebunden wird. Für solche Deckschichten werden Glaspartikel mit einer Größe von ca. 3 bis 5 µm verwendet, und die Glaspartikelschicht kann mit einer Stärke bspw. bis zu 20 bis 30 µm aufgebracht werden, was bspw. ebenfalls durch Aufdrucken erfolgen kann. Im übrigen ändert sich am im Verfahren nach der DE-A-42 03 162 vorgegebenen Verhältnis Lösungs- und Bindemittel/Keramik-Farbpigmente im wesentlichen nichts, wobei aber im vorliegenden Fall im druckbaren Farbansatz weniger Glas und insbesondere auch weniger Bindemittel enthalten sind. Hierzu wird auf das nachfolgende Ausführungsbeispiel verwiesen.

Die erfindungsgemäß hergestellten Transferdruckpapiere eignen sich insbesondere für Keramiken, Porzellane und Gläser und ggf. auch metallische Gegenstände, für die die erfindungsgemäß hergestellten Transferdruckpapiere nicht nur den Vorteil einer äußerst kostengünstigen Ausstattung von Gegenständen wie Fliesen mit aufwendigen Dekoren erbringt, sondern auch die umweltfreundliche Möglichkeit des Ersatzes von Flaschenetiketten aus Papier durch aufgebrannte, beliebig aufwendige Dekore schafft, die insgesamt sogar noch kostengünstiger sind als Papieretiketten, die nach Gebrauch und Entfernung entsorgt werden müssen.

Beim erfindungsgemäßen Verfahren wird, wenn besonders blasse Bereiche der Vorlage keine Unterschreitung der Näpfchentiefe bspw. unter 30 µm verlangen, vorzugsweise mit Druckformen gearbeitet, die jeweils für eine Farbe eine nicht variable Näpfchentiefe aufweisen, wobei die unterschiedliche Farbgebung im Druck, wie vorerwähnt, durch die gemäß der Druckvorlage variierte Näpfchendichte und/oder Querschnittsbemessung erreicht wird.

Für Weichporzellane (Knochenporzellane) können die erfindungsgemäß hergestellten Transferdruckpapiere ebenfalls verwendet werden. Da aber Weichporzellane, wie erwähnt, eine Glasur aufweisen, ist es in diesem Fall nicht erforderlich, die Transferdruckpapiere, wie vorteilhaft bei Transferdruckpapieren für Hartporzellan, mit einer dünnen Schicht aus Glaspartikeln abzudecken, denn der auf die Glasur per Übertragungslack übertragene Druck, d.h., dessen Farbpigmente und Keramikfarbpigmente schmelzen in ausreichendem Maße in die Glasur beim Brennen sicher ein.

Die Partikelgröße der Farbpigmente liegt auch beim erfindungsgemäßen Verfahren bei < 10 µm, vorzugsweise < 5 µm. Im Zusammenhang mit dem erfindungsgemäßen Verfahren hat es sich für das Drucken bezüglich eines möglichst optimalen Überganges der Farbe aus den Näpfchen auf das Transferpapier außerdem als vorteilhaft erwiesen, hinterschneidungsfreie Näpfchen zu verwenden, welche Näpfchenform für den normalen Tiefdruck an sich bekannt ist. Diese in Weiterbildung des erfindungsgemäßen Verfahrens ebenfalls gezielt vorgesehene Verwendung speziell solcher zur Druckseite hin völlig offenen Näpfchen, gewinnt aber im vorliegenden Zusammenhang an besonderer Bedeutung, da es hierbei in besonders hohem Maße darum geht, den Inhalt der Näpfchen beim Druckvorgang möglichst vollständig zu entleeren und auf das Transferpapier zu übertragen.

Soweit hier bezüglich der Näpfchentiefen und der Prozentualanteile nur Bereiche und Zirkaangaben angeführt sind, so hat dies seinen Grund darin, daß sich von unterschiedlichen Herstellern gelieferte Keramikfarbpigmente immer auch bis zu einem gewissen Grad unterscheiden. Maßgebend bleibt dabei aber immer einerseits die Reduzierung des Glasanteiles verbunden mit einer Erhöhung des Farbpigmentanteiles und andererseits der gezielte Rückgriff auf beim normalen Tiefdruck übliche Näpfchentiefen und Letzteres wiederum verbunden mit geringerer Menge an Bindemittel in den Näpfchen und damit im Transferdruckpapier.

Sofern vom Lieferanten bzw. Hersteller der Glasanteil der Keramikfarbpigmente nicht oder nicht verbindlich angegeben werden kann, ist es für den Hersteller der Transferdruckpapiere erforderlich, den Glasanteil zu ermitteln, um daran orientiert die erforderliche Menge an Farbpigmenten zugeben zu können.

Schematisch ist in der zugehörigen Zeichnung folgendes verdeutlicht:
- Fig. 1: stark vergrößert ein Schnitt durch ein Transferdruckpapier für Hartporzellan;
- Fig. 2: stark vergrößert ein Schnitt durch ein Näpfchen in der Tiefdruckform;
- Fig. 3: stark vergrößert ein Anordnungsmuster von Näpfchen in der Tiefdruckform und
- Fig. 4: das Farbgebungssystem für den Druck einer Farbe an einer kontinuierlich arbeitenden, ansonsten aber nicht dargestellten Rotationstiefdruckmaschine.

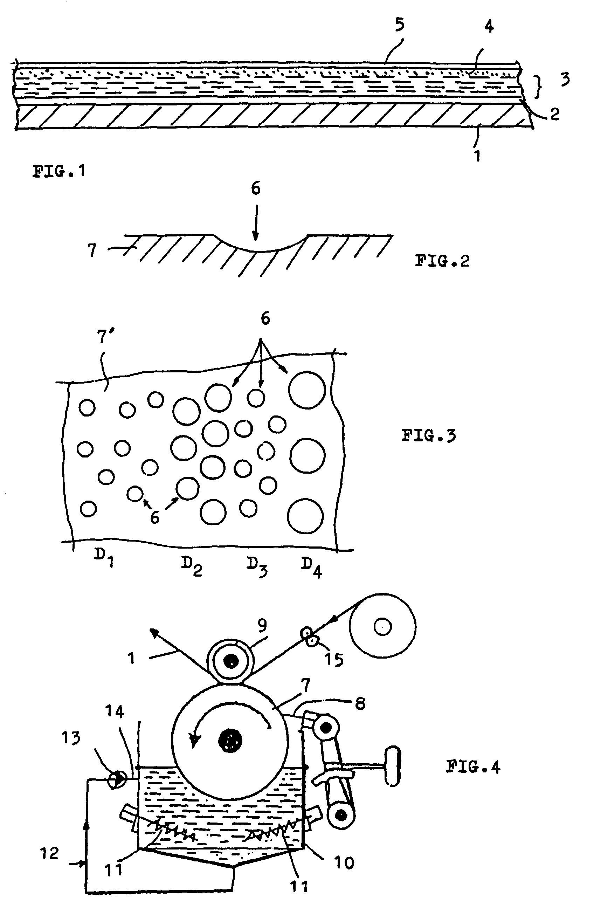

Obgleich ohne weiteres vorstellbar, ist in der zeichnerisch stark vergrößerten Darstellung gemäß Fig. 1 der Schichtaufbau eines im Mehrfarb-Tiefdruck hergestellten Transferdruckpapieres für Hartporzellan verdeutlicht, in der bezeichnet sind mit 1 das Papier, mit 2 die Gelatine-, Wachs- oder Gummi-Arabikum-Schicht, mit 3 die im jeweiligen Raster aufgedruckten Farbschichten, mit 4 die alles überdeckende Glaspartikelschicht und mit 5 die ebenfalls alles überdeckende Schicht aus einem Übertragungslack. Bei Transferdruckpapier für Weichporzellan ist, wie erwähnt, keine Glaspartikelschicht 4 vorhanden. Bei blassen Farbbereichen der Vorlage tendieren die Öffnungsgrößen der Näpfchen 6 zu kleineren Öffnungen und ggf. auch zu geringerer Dichteanordnung der Näpfchen und bei satteren Farbbereichen umgekehrt, wie dies in Fig. 3 schematisch angedeutet ist, die schematisch einen Flächenausschnitt 7' des Tiefdruckzylinders 7 zeigt mit unterschiedlichen Öffnungsgrößen der Näpfchen 6 und unterschiedlichen Dichteanordnungen D₁ bis D₄ entsprechend einer entsprechenden Tönung der Vorlage. Fig. 2 verdeutlicht, daß die vorzugsweise per Ätzung erzeugten Näpfchen 6 nach oben völlig offen sind, was gewährleistet, daß die in die Näpfchen eingebrachte Farbmenge in konstanter Menge auf das Transferdruckpapier übertragen wird.

Die Tiefdruckmaschine zur Durchführung des Verfahrens besteht in bekannter Weise und gemäß Fig. 4 aus einem Tiefdruckzylinder 7 mit Rakel 8 und zugeordnetem Druckzylinder 9 und aus einem Farbvorratsbehälter 10, aus dem die Farbe direkt, wie dargestellt, oder indirekt mittels Übertragungszylinder auf den Tiefdruckzylinder 7 übertragen wird, und aus Förderelementen 15 zur Zuführung des zu bedruckenden Transferdruckpapiers 15 zwischen Tiefdruckzylinder 7 und Druckzylinder 9.

Um den Farbansatz im Tiefdruckverfahren auf das Transferdruckpapier 1 per Druck übertragen und die Pigmente vor ihrer Übernahme auf den Tiefdruckzylinder 7 in homogener Verteilung im Farbansatz halten zu können, ist im Farbvorratsbehälter 10 ein die homogene Verteilung der Pigmente aufrechterhaltender Homogenisator angeordnet, wie dies in Fig. 4 dargestellt ist, in der bspw. zwei schnellaufende Schneckenrührer 11 in den Vorratsbehälter 10 einragen. Statt dessen oder ergänzend, wie dargestellt, ist es aber auch möglich, am Vorratsbehälter 10 eine Umlaufleitung 12 mit einer Umwälzpumpe 13 vorzusehen, wobei die Umwälzpumpe 13 zweckmäßig am oben am Vorratsbehälter einmündenden Rücklaufanschluß 14 angeordnet ist. Nicht dargestellt ist am Vorratsbehälter 10 die notwendige Farbzufuhrleitung und ein Überlauf, um das Tauchniveau für den Tiefdruckzylinder 7 aufrechtzuerhalten.

Nur der Vollständigkeit halber sei darauf hingewiesen, daß beim Drei- oder Vierfarbdruck von Transferdruckpapier drei oder vier Druckwerke bzw. Drucksysteme, gemäß Fig. 4 hintereinander angeordnet werden müssen.

Die Werte für einen Vierfarbdruck des Transferdruckpapieres ergeben sich nach dem folgenden Ausführungsbeispiel, das sich auf Transferdruckpapier für Hartporzellan bezieht. Die gleichen Werte ergeben sich auch für Weichporzellan, bei dem aber, wie erwähnt, keine Glaspartikeldeckschicht 4 auf das Transferdruckpapier ausgedruckt wird.

### Ausführungsbeispiel

### Herstellung von Transferdruckpapier für Hartporzellan

Für das Bindemittel wurde folgende Zusammensetzung verwendet:

| | in Anteilen pro Tausend |
|---|---|
| Butylazetat | 570 - 640 |
| Butylbenzylphtalat | 50 - 70 |
| Methylmethacrylat | 190 - 210 |
| Ethylacetat | 90 - 110 |
| Polyäthylenwachsdispersion | 25 - 95 |

Das Ansatzmittel für den Glaspartikelansatz besteht demgegenüber aus Methacrylat in Lösung mit einem Aromatengemisch und Weichmachern.

Bei Butylbenzylphtalat handelt es sich um ein sogenanntes Siebdrucköl der Firma Heraeus mit der No. 200195.

Abgesehen von den verwendeten Näpfchentiefen (Tabelle IV) ist also wesentlich der Farbansatz gemäß folgender Tabelle III. Hiernach enthalten die Farbansätze für den Druck im Durchschnitt ca. 46% Bindemittel, ca. 43% Keramikfarbpigmente und ca. 16% reine Farbpigmente, die prozentual den Glasanteil im Farbansatz reduzieren.

**Tabelle I**

| Keramikfarbpigmente | Pigmentgröße µm | Glasanteil % | Fabrikat |
|---|---|---|---|
| blau | < 5 | 75 | Credec 121515 |
| gelb | < 5 | 90 | Heraeus Ho4336/2ff |
| rot | < 5 | 80 | Credec 14 566 |
| schwarz | < 5 | 78 | Credec 14 209 |

**Tabelle II**

| Farbpigmente (ohne Glas) | Pigmentgröße µm | Fabrikat |
|---|---|---|
| blau | < 5 | Credec 21 544 |
| gelb | < 5 | Heraeus 39332/2/2ff |
| rot | - | - (entfällt) |
| schwarz | < 5 | Credec 24 137 |

**Tabelle III**

| Farbansatz | Bindemittel % | Keramikfarbpigmente % | Farbpigmente % |
|---|---|---|---|
| blau | 53 | 33 | 14 |
| gelb | 40 | 52 | 8 |
| rot | 40 | 60 | - |
| schwarz | 50 | 25 | 25 |

**Tabelle IV**

| Näpfchentiefen | µm |
|---|---|
| blau | 40 |
| gelb | 55 |
| rot | 40 |
| schwarz | 35 |

Je nach Tönung der Vorlage liegen die Näpfchenöffnungen in der Größenordnung von 8 - 150 µm.

### Glaspartikeldeckschicht:

- Partikelgröße:: < 5 µm, Schichtstärke ∼ 8 µm
- Glaspartikelansatz:: Ansatzmittel 50 %
Glaspartikel 50 %

## Patentansprüche

1. Verfahren zur Herstellung von Transferdruckpapieren für das Aufbrennen von farbigen, insbesondere bunten Bild-, Schrift und/oder Dekordarstellungen auf bei hohen Erhitzungstemperaturen formbeständig bleibende Gegenstände, insbesondere Gegenstände aus Keramik oder Glas, wobei die im druckbaren Farbansatz angesetzten Keramikfarbpigmente im Tiefdruckverfahren auf das Transferdruckpapier übertragen und dabei die Farbpigmente vor ihrer Übernahme auf den Tiefdruckzylinder in homogener Verteilung im Lösungsansatz gehalten werden, wobei für den Druck des Transferpapieres Näpfchentiefen im Bereich von 20 µm bis 60 µm in Abhängigkeit von der Tönung der Vorlage und Keramikfarbpigmente verwendet werden, deren Glaspartikelanteil, und zwar mindestens der nicht roten Farbpigmente in bezug auf den bisher üblichen Glaspartikelanteil von 70-80% um mindestens 10% im Farbansatz reduziert ist und dabei durch ein entsprechend prozentuales Mehr an reinen Farbpigmenten der Glaspartikelanteil an der Gesamtmenge der im Farbansatz enthaltenen Farbpigmente und Glaspartikel kleiner gehalten wird als der Farbpigmentanteil.

2. Verfahren nach Anspruch 1,
**dadurch gekennzeichnet,**
daß in der Tiefdruckform in bezug auf die Näpfchenöffnungsränder hinterschneidungsfreie Näpfchen verwendet werden.

3. Verfahren nach Anspruch 1 oder 2,
**dadurch gekennzeichnet,**
daß die mindestens eine gedruckte Keramikfarbpigmentschicht oder mindestens die oberste von mehreren gedruckten Keramikfarbpigmentschichten mit einer Abschlußschicht aus Glaspartikeln abgedeckt wird.

4. Verfahren nach Anspruch 3,
**dadurch gekennzeichnet,**
daß für die aufgebrachte Abschlußschicht aus Glaspartikeln solche mit einer Partikelgröße von < 10 µm vorzugsweise < 3 bis 5 µm verwendet werden.

5. Verfahren nach einem der Ansprüche 1 bis 4,
**dadurch gekennzeichnet,**
daß den Tönungen der Vorlage durch Bemessung der Öffnungsquerschnitte und/oder der Dichteanordnung der Näpfchen entsprochen wird.

## Claims

1. A process of manufacturing transfer printing paper for burning colored, in particular, van-colored pictures and graphical and/or decorative designs on items remaining stable in shape at high heating temperatures, in particular, items of ceramics or glass, wherein the ceramic dye pigments contained in the printable ink solution, by photogravure, are transferred to the transfer printing paper, with the paint pigments prior to their being taken over by the gravure printing cylinder being held in the solution in homogeneously distributed condition, wherein cell depths in the rage of between 20 and 60 µm in response to the coloring of the original copy and ceramic pigment dyes are used for printing the transfer paper, with the glass particle share at least of the non-red dye pigments, compared to the conventional glass particle share of between 70 and 80%, being reduced by at least 10% in the solution and wherein the glass particle share in the total amount of the paint pigments and glass particles contained in the ink solution is kept smaller than the share of paint pigments due to a corresponding increase in pure paint pigments.

2. A process according to claim 1,
characterized in that relative to the opening edges of the cells, non-undercut cells are used in the gravure printing block.

3. A process according to claims 1 or 2,
characterized in that at least one printed layer of ceramic pigment dye or at least the uppermost layer of a plurality of printed layers of ceramic pigment dye is covered by a coating of glass particles.

4. A process according to claim 3,
characterized in that glass particles of a particle size < 10 µm, preferably between < 3 and 5 µm are used for the coating of glass particles as applied.

5. A process according to any one of claims 1 through 4,
characterized in that the coloring of the original copies is taken into account by correspondingly dimensioning the cross-sections of the openings and/or the spacings of of the cells.

## Revendications

1. Procédé pour la fabrication de papiers d'impression par transfert pour la cuisson de représentations d'images, d'écriture et/ou de décor de couleur, en particulier de représentations multicolores, sur des objets restant résistants à la déformation même à de hautes températures de réchauffement, en particulier sur des objets en céramique ou en verre, les pigments de couleur céramiques, préparés dans une préparation de couleur imprimable, étant transférés au papier d'impression par transfert par héliogravure et les pigments étant alors maintenus, avant leur réception sur le cylindre hélio, répartis de manière homogène dans la préparation de la solution, des profondeurs de godets de l'ordre de 20 µm à 60 µm étant utilisées pour l'impression du papier pour transfert en fonction de la teinte du modèle et des pigments de couleur céramiques étant utilisés dont le taux de particules de verre, et ce au moins des pigments de couleur non rouge, étant réduit, par rapport au taux de particules de verre usuel jusqu'à présent de 70 à 80%, d'au moins 10% dans la préparation de couleur et le taux des particules de verre étant maintenu plus petit que le taux des pigments de couleur par une quantité plus importante en pourcentage de pigments de couleur purs dans la quantité totale des pigments de couleur et des particules de verre contenus dans la préparation de couleur.

2. Procédé selon la revendication 1,
caractérisé en ce
que des godets sans contre-dépouille par rapport aux bords d'ouverture des godets sont utilisés dans la planche hélio.

3. Procédé selon la revendication 1 ou 2,
caractérisé en ce
que la couche de pigments de couleur céramiques imprimée qui existe au moins ou au moins la couche supérieure de plusieurs couches de pigments de couleur céramiques imprimées est recouverte par une couche de couverture en particules de verre.

4. Procédé selon la revendication 3,
caractérisé en ce
que, pour la couche de couverture de particules de verre appliquées au-dessus, on utilise des particules de verre d'une grandeur de particule < 10 µm, de préférence < 3 à 5 µm.

5. Procédé selon l'une des revendications 1 à 4,
caractérisé en ce
que le dimensionnement des sections d'ouverture et/ou de la densité du placement des godets correspond aux teintes du modèle.
